(19) Europäisches Patentamt
European Patent Office
Office européen des brevets

(11) **EP 3 071 392 B1**

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(21) Anmeldenummer: **14799181.4**

(22) Anmeldetag: **18.11.2014**

(51) Int Cl.:
**B29C 65/00** *(2006.01)*    **C09J 5/02** *(2006.01)*
**C08J 5/12** *(2006.01)*    **B29C 65/14** *(2006.01)*

(86) Internationale Anmeldenummer:
**PCT/EP2014/074947**

(87) Internationale Veröffentlichungsnummer:
**WO 2015/075040 (28.05.2015 Gazette 2015/21)**

(54) **VERFAHREN ZUM VERBINDEN VON SILIKONGUMMI MIT EINEM SUBSTRAT**

METHOD FOR CONNECTING SILICONE RUBBER TO A SUBSTRATE

PROCÉDÉ DE LIAISON DE CAOUTCHOUC SILICONE À UN SUBSTRAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2013 DE 102013223608**

(43) Veröffentlichungstag der Anmeldung:
**28.09.2016 Patentblatt 2016/39**

(73) Patentinhaber: **Fraunhofer-Gesellschaft zur Förderung der angewandten Forschung e.V.
80686 München (DE)**

(72) Erfinder:
• **WILKEN, Ralph
  26180 Rastede (DE)**
• **DÖLLE, Christopher
  27749 Delmenhorst (DE)**
• **SCHILINSKY, Laura
  28203 Bremen (DE)**

(74) Vertreter: **Eisenführ Speiser
Patentanwälte Rechtsanwälte PartGmbB
Postfach 10 60 78
28060 Bremen (DE)**

(56) Entgegenhaltungen:
EP-A2- 0 513 538    WO-A1-2013/042377
DE-A1-102007 020 655    JP-A- 2007 130 836
JP-A- 2009 028 923    US-A1- 2013 037 207

• TAKATOKI YAMAMOTO: "Study on 172-nm vacuum ultraviolet light surface modifications of polydimethylsiloxane for micro/nanofluidic applications", SURFACE AND INTERFACE ANALYSIS., Bd. 43, Nr. 9, 19. September 2011 (2011-09-19), Seiten 1271-1276, XP055167410, GB ISSN: 0142-2421, DOI: 10.1002/sia.3715

**Beschreibung**

Die Erfindung betrifft ein Verfahren zum Verbinden eines Substrates mit Silikongummi, wobei das Silikongummi so mit UV-Strahlung behandelt wird, dass es beim Kontaktieren mit der Substratoberfläche zur Ausbildung einer stoffschlüssigen Verbindung zwischen Substratoberfläche und Silikongummioberfläche kommt. Die Erfindung betrifft ferner ein gemäß dem erfindungsgemäßen Verfahren zum Verbinden mit einem Substrat vorbereitetes Silikongummi sowie einen Verbund, der nach dem erfindungsgemäßen Verfahren hergestellt wurde.

Stand der Technik:

Silikongummi-Silikongummi-Verbünde und Silikongummiverbünde mit anderen Fügepartnern werden von zahlreichen Industriezweigen produziert. Dies sind vor allem die Medizintechnik, Textilgewerbe, Elektronikindustrie, Fahrzeugbau sowie die Herstellung von Gummi- und Kunststoffwaren. Es besteht generell ein hoher Anreiz, auf die Klebvorbehandlung mit oft gesundheitsschädlichen Chemikalien zu verzichten und die Verbundqualität zu erhöhen bzw. den Fügevorgang allgemein zu vereinfachen und kostenattraktiver zu gestalten. Derzeit erfolgt das Verbinden von Silikongummi jedoch häufig durch Einsatz eines Klebstoffes, was einen zusätzlichen Materialaufwand erfordert und eine Reihe von Prozessunsicherheiten mit sich bringt. Typische Einsätze für homogene Silikongummi-Silikongummi-Verbünde sind in der Medizintechnik zum Beispiel in Beatmungsgeräten und beim Prothesenbau. Typische Beispiele für heterogene, silikongummienthaltende Verbünde sind im Fahrzeugbau und der Elektroindustrie zu finden, zum Beispiel dünne Silikongummidichtungen im Verbund mit Metall oder silikongummibasierte Regensensoren auf der Windschutzscheibe.

Zur Verbesserung der Prozesssicherung sind im Stand der Technik Plasmaverfahren bekannt, welche zur Steigerung der Benetzbarkeit vor Applikation eines Klebstoffs als Vorbehandlungsschritt eingesetzt werden, z.B. EP0761415B9, DE4407478A1. Darüber hinaus sind Aktivierungsprozesse für Polymere unter Verwendung von Vakuumultraviolett (VUV)-Lichtquellen bekannt (AiF-Projekt ExAkt, IGF-Vorhaben-Nr. 16296).

Weiterhin sind plasmapolymere Beschichtungen bekannt, die haftvermittelnde Wirkung haben. (WO2004035857A2). Diese Schichten haben gute Haftung einerseits zum Substrat und andererseits zu anschließend aufgebrachten Klebstoffen, Lacken, Dichtstoffen. Ebenso sind Haftvermittlerschichten unter Einsatz von VUV-Lichtquellen beschrieben (WO 002008132230A3).

Eine noch höhere Prozesssicherheit ist wünschenswert und kann realisiert werden, indem der Einsatz gesonderter Haftvermittler vermieden wird:
Das Unternehmen marchplasma beschreibt ein Gerät, bei dem ein Silikongummi mit Hilfe eines Sauerstoffplasmas vorbehandelt wird und im Anschluss in Kontakt mit einem Glas gebracht wird. Unter kurzzeitiger Temperaturauslagerung bildet sich ein fester Glas-Silikongummi-Verbund.

In Yamamoto, T., Fujil, T., Proceedings of μTAS 2004: 8th International Conference on Miniaturized Systems for Chemistry and Life Science, September 26-30, Malmö Sweden, S. 133, (2004), The Royal Society of Chemistry, Cambridge und Yamamoto, T., Surface and Interface Analysis 2011, 43, 1271 kommt für die Herstellung mikrofluidischer Systeme ein Bindungsaufbau ohne Klebstoff von Silikongummi zu Glas und von Silikongummi zu einem Epoxid durch Bestrahlung mit Licht der Wellenlänge 172 nm aus Excimerlampen zustande. Hierbei ist laut Beschreibung nur eine extrem kurze Strahlungsexposition des Silikongummis mit Strahlungsdosen $\leq 30$ mJ/cm$^2$ erfolgreich für die Ausbildung kovalenter Bindungen. Eine Exposition mit Strahlungsdosen von 100 mJ/cm$^2$ bewirkt bereits eine Abnahme der Haftfestigkeit auf deutlich unter 50% des Maximalwerts. Leider hat sich in der Praxis die Lehre der beiden Veröffentlichungen als nicht durchführbar herausgestellt, da keine Verbindungen mit ausreichender Haftfestigkeit hergestellt werden konnten.

In der Offenlegungsschrift US 2013/0037207A1, bei der der Autor der beiden vorgenannten Veröffentlichungen der einzige Erfinder ist, wird das Ergebnis der beiden vorbesprochenen Veröffentlichungen ergänzt: Für Silikongummi (weich und elastisch) werden die oben gemachten Limits bestätigt, während für Silikonharze (härter und weniger flexibel) zum Herstellen von stabilen Verbundstrukturen höhere Strahlungsdosen eingesetzt werden.

Trotzdem ließen sich in der Praxis für Silikongummis nach der in der Offenlegungsschrift beschriebenen Lehre keine Verbindungen mit messbarer Haftfestigkeit herstellen.

In Bhattacharya, S.,Datt, A., Berg, M.J., Gangopadhyay, S., Journal of Microelectomechanical Systems 2005, 14, 590 wird für die Herstellung mikrofluidischer Systeme die Ausbildung einer molekularen Verbindung von Silikongummi zu Silikongummi und von Silikongummi zu Glas durch die Anwendung eines Sauerstoffplasmas berichtet. Für eine gute Verbundstabilität ist hierbei eine sehr hohe Oberflächenenergie vorteilhaft und es erfolgt ein direktes Fügen der Halbzeuge. Eine Plasmavorbehandlung hat allerdings den Nachteil, dass ein verhältnismäßig hoher apparativer Aufwand erforderlich ist.

Vor diesem Hintergrund war es Aufgabe der Erfindung, ein Verfahren anzugeben, das eine verbesserte Prozesssicherheit und/oder einen geringeren apparativen Aufwand ermöglicht und bei dem der Einsatz eines gesonderten Haftvermittlers, wie einem Klebstoff nicht mehr erforderlich ist, um Silikongummi effektiv mit Substratoberflächen zu verbinden.

Erfindungsgemäß wird diese Aufgabe gelöst durch ein Verfahren zum Verbinden eines Substrates mit Silikongummi, umfassend die Schritte:

a) Bereitstellen des Substrates, wobei das Substrat an seiner Oberfläche über reaktive Gruppen verfügt, ausgewählt aus der Gruppe bestehend aus Hydroxy-, Alkoxy-, Acetoxy-, Ether-, Keto-, Aldehyd, Ester-, Carboxy- und/oder Halogenidgruppe, wobei Hydroxy-, Halogenid- und Alkoxy (insbesondere Methoxy-) bevorzugt sind,

b) Bereitstellen von Silikongummi, bevorzugt in teilvernetzter und besonders bevorzugt in vollständig vernetzter Form,

c) Bestrahlen des Silikongummis mit UV-Strahlung (mindestens) einer Wellenlänge $\leq$ 250 nm, bevorzugt $\leq$ 225 nm und einer Strahlungsdosis von 150 mJ/cm$^2$ - < 2 J/cm$^2$ bevorzugt 150 mJ/cm$^2$ - 1,8 J/cm$^2$ bei einer sauerstoffhaltigen Atmosphäre ("Aktivierung"), so dass das Silikongummi einen um $\geq$ 4 Atom% erhöhten Sauerstoffgehalt besitzt, bezogen auf die Gesamtzahl der in der Oberfläche enthaltenen C, Si und O-Atome, gemessen mittels XPs

d) Kontaktieren der Substratoberfläche mit dem bestrahlten Silikongummi, wobei es zum Stoffschluss zwischen der Substratoberfläche und dem Silikongummi kommt ("Fügen, Verbinden").

Überraschenderweise hat sich herausgestellt, dass - anders als nach den Beschreibungen im oben geschilderten Stand der Technik zu erwarten - durch die Behandlung mit einer Strahlungsdosis im oben beschriebenen Bereich Silikongummi erfolgreich und dauerhaft mit u. g. Substraten verbunden werden können.

Ein "Silikongummi" im Sinne der Erfindung ist stets ein Elastomer, wobei dies bedeutet, dass die Reißdehnung des Materials mindestens >100 % ist.

Die Reißdehnung wird gemessen nach DIN 53504:2009-10.

Bevorzugte Eigenschaften eines "Silikongummi" im Sinne der vorliegenden Erfindung sind eine Shore Härte A von 5 bis 80, und/oder ein E-Modul bei 100 % Dehnung < 5 MPa und/oder eine Zugfestigkeit von $\leq$ 10 MPa.

Die shore A Härte (und shore D Härte, s.u.) wird gemessen nach DIN ISO 7619-1:2010. Die Zugfestigkeit sowie die Spannungswerte im Zugversuch (E-Modul bei 100 % Dehnung) werden gemessen nach DIN 53504:2009-10.

Ein Silikongummi im Sinne dieser Erfindung kann dabei unvernetzt vorliegen (Kautschuk), teilvernetzt oder vollständig vernetzt. Teilvernetzt bedeutet, dass bevorzugt im Rahmen einer Vulkanisierungsreaktion eine weitere Vernetzung bis zur vollständigen Vernetzung (voll vernetzt) erfolgen kann.

Silikongummis im Sinne des vorliegenden Textes enthalten bevorzugt silikatische Füllstoffe, besonders bevorzugt pyrogene Kieselsäure.

Ein bevorzugtes Silikongummi im Sinne der vorliegenden Erfindung enthält 20 Gew.-% bis 40 Gew.-%, bevorzugt 22 bis 38 Gew.-%, Füllstoffe, bezogen auf die Gesamtmasse der Silikongummiformulierung.

Ausdrücklich nicht zu "Silikongummi" im Sinne der vorstehenden Definition zählen "Silikonharze". Ein Silikonharz ist kein Elastomer, wobei dies bedeutet, dass die Reißdehnung des Materials < 100 % ist. Silikonharze enthalten typischerweise keine pyrogene Kieselsäure als Füllstoff. In vollständig vernetzter Form haben sie E-Module, die jene der Silikongummis um mindestens eine Größenordnung übertreffen, insbesondere E-Module von 100-1000 MPa. Zusätzlich oder alternativ verfügen "Silikonharze" im Sinne dieses Textes bevorzugt über eine shore D "Härte" von 20-50.

Geeignet für das erfindungsgemäße Verfahren sind Substrate, die entweder ohne Vorbehandlung an ihrer Oberfläche über die genannten reaktiven Gruppen verfügen oder dies nach einer entsprechenden Vorbehandlung tun. Mit den genannten reaktiven Gruppen kann die gemäß dem erfindungsgemäßen Verfahren aktivierte Silikongummioberfläche insbesondere über Kondensationsreaktionen in einem so hohen Maße stoffschlüssige (insbesondere kovalente) Bindungen ausbilden, dass ein fester Verbund zwischen Substrat und Silikongummi entsteht. Bei der Bestrahlung gemäß dem erfindungsgemäßen Verfahren kommt es zu einer Oxidation der Silikongummioberfläche, wobei der Sauerstoffgehalt zu- und der Kohlenstoffgehalt abnehmen. Auf diesem Wege können ausvulkanisierte Silikongummis trockenchemisch und stoffschlüssig miteinander verbunden werden, wobei entweder nur eine oder beide zu verbindenden Oberflächen gemäß dem erfindungsgemäßen Verfahren bestrahlt werden können.

Bevorzugt erfolgt im erfindungsgemäßen Verfahren die Bestrahlung mittels einer Excimerlampe oder einem Quecksilberniederdruckstrahler, da sich diese Lampen als besonders geeignet und gut handhabbar herausgestellt haben.

Quecksilberniederdruckstrahler verfügen zusätzlich zu der Strahlung im Bereich von 185 nm über eine Strahlungsbande bei 254 nm. Diese Strahlungsbande kann sich allgemein vorteilhaft auf die Silikongummiaktivierung auswirken. Für die Berechnung der Strahlendosis wird hier (wie auch für den gesamten Text) stets nur die Strahlung berücksichtigt, deren Wellenlänge $\leq$ 250 nm ist. Dies bedeutet, dass die aufgrund der 254 nm-Bande eingebrachte Dosis nicht bei der Berechnung der erfindungsgemäß zu verwendenden Dosis mitgezählt wird.

Im Sinne dieses Textes wird bevorzugt (und im Zweifelsfall) für die Bestimmung der Bestrahlungsenergiedichte bzw. Bestrahlungsdosis E (Strahlungsdosis) und der Strahlungsintensität bzw. Bestrahlungsstärke I von einem vereinfachten geometrischen Ansatz für das Strahlungsfeld des Strahlers ausgegangen. Anstelle des realen Volumenstrahlers wird stattdessen von einem Linienstrahler ausgegangen, dessen Licht radial nach außen abgestrahlt wird. Hierbei werden die Gesamtstrahlungsleistung des Volumenstrahlers und des Linienstrahlers als identisch angesetzt.

Zu einem vorgegebenen Abstand a zur Strahlerachse des Linienstrahlers gehört bei radialsymmetrischer Abstrahlung somit eine Mantelfläche M(a), die sich durch eine konstante Strahlungsintensität I(a) auszeichnet.

Die Größe der Mantelfläche berechnet sich zu:

$$(1) \qquad M(a)\ [m^2] = 2 \times pi \times a\ [m] \times s\ [m],$$

wobei s die endliche Leuchtlänge des Strahlers kennzeichnet.

Somit ergibt sich die Strahlungsintensität I(a) im Abstand a zu:

$$(2) \qquad I(a)\ [W/m^2] = W_0\ [W]\ /\ M(a)\ [m^2]$$

mit $W_0$ als Gesamtstrahlungsleistung des Strahlers. Die Strahlungsintensität I(a) bezeichnet hierbei eine Flächenleistungsdichte oder wird synonym als Bestrahlungsstärke bezeichnet.

Sowohl $W_0$ als auch s sind dem technischen Informationsblatt des Lampenherstellers zum Strahler zu entnehmen. Oftmals ist nur der Wert der Strahlungsintensität an der Strahleroberfläche angegeben, d.h. die Gesamtstrahlungsleistung I (r) im Abstand r mit r als Radius des zylindrischen Querschnitts des realen Volumenstrahlers. Hieraus lässt sich für nachfolgende Berechnungen die Gesamtstrahlungsleistung $W_0$ berechnen zu:

$$(3) \qquad W_0\ [W] = I(r)\ [W/m^2] \times M(r)\ [m^2].$$

Mit r als Radius des zylindrischen Querschnitts des realen Volumenstrahlers resultiert die Strahlungsintensität nach dem vereinfachten Modellansatz zu:

$$(4) \qquad I(d)[W/m^2] = W_0\ [W]\ /\ M(d)\ [m^2],$$

wobei d nun den Abstand zur zugänglichen Strahleraußenfläche mit

$$(5) \qquad a[m] = r[m] + d[m]$$

kennzeichnet. In der Praxis entspricht d dem Abstand zwischen der bestrahlten Oberfläche und der Strahleraußenkante.

Weiterhin berechnet sich die Bestrahlungsenergiedichte E im Abstand d somit zu:

$$(6) \qquad E(d)\ [J/m^2] = I(d)\ [W/m^2] \times t[s],$$

wobei t [s] die Zeitdauer der Bestrahlung angibt. Die Bestrahlungsenergiedichte wird synonym auch als Bestrahlungsdosis bezeichnet.

Sofern die Arbeitsatmosphäre keine (V)UV-Strahlung absorbierenden Anteile enthält, kann die dargestellte Berechnung als gute Näherung verwendet werden. Dies gilt ebenso bei Inertgas-Atmosphären mit keiner bzw. vernachlässigbarer Absorption, z.B. unter Stickstoffatmosphäre.

Enthält die Arbeitsatmosphäre dagegen (V)UV-Strahlung absorbierende Anteile, so sind diese wellenlängenabhängig in der Berechnung über das Lambert-Beersche Gesetz zu berücksichtigen. Nach Lambert-Beer bestimmt sich die Strahlungsleistung $W_{abs}(d, \lambda)$ beim Durchlaufen eines Gasvolumens der Dicke d zu:

$$(7) \qquad W_{abs}(d,\lambda)[W] = W_0\ [W] \times exp\ (-d[m]/(k_B[J/K] \times T[K]) \times \sigma(\lambda)[m^2] \times n[mol]\ /\ V[1/m^3] \times$$

$$R[J/mol/K] \times T[K])$$

mit

$W_0$ als Strahlerausgangsleistung,
$k_B$ als Boltzmann-Konstante ($1,3806488 \times 10^{-23}$ J/K),
T [K] als Temperatur (RT= 298 K (=25°C)),
$\sigma(\lambda)$ [m$^2$] als wellenlängenabhängiger Absorptionsquerschnitt des betrachteten Gases,
n[mol]/ V[m$^3$] als Stoffmenge bzw. Molekülanzahl des Gases pro Volumeneinheit,
R[J/mol/K] als universelle Gaskonstante (R = 8,314 J/mol/K).

Mit P als von außen technisch einfach messbarer Druck vereinfacht sich mit

$$(8) \qquad P\,[N/m^2] = n[mol]\,/\,V[1/m^3] \times R[J/mol/K] \times T[K]$$

die Gleichung (7) zu

$$(9) \qquad W_{abs}(d,\lambda)[W] = W0\,[W] \times \exp\left(-d[m]/(kB[J/K] \times T[K]) \times \sigma(\lambda)[m^2] \times P\,[N/m^2]\right).$$

Bei der Anwesenheit von mehreren Gasspezies einer Anzahl m in der Arbeitsatmosphäre sind entsprechend alle Gase mit ihrem wellenlängenabhängigen Absorptionsquerschnitt und ihrem Partialdruck zu berücksichtigen:

$$(10) \qquad W_{abs}(d,\lambda)[W] = W_0\,[W] \times \exp\left(-d[m]/(k_B[J/K] \times T[K]) \times (\sigma_1(\lambda)[m^2] \times P_1[N/m^2] + \right.$$
$$\left. \sigma_2(\lambda)[m^2] \times P_2[N/m^2] + \ldots + \sigma_m(\lambda)[m^2] \times P_m[N/m^2])\right).$$

Um sowohl die Reduzierung der Strahlungsintensität durch die radiale Abnahme des Strahlungsfeldes als auch durch Absorption zu berücksichtigen ist in Gleichung (4) die Ausgangsstrahlerleistung $W_0$ durch die abstands- und wellenlängenabhängige Strahlungsleistung $W_{abs}(d, )$ nach Gleichung (10) zu ersetzen. Man erhält einen abstands- und wellenlängenabhängigen Ausdruck für die Strahlungsintensität:

$$(11) \qquad I(d,\lambda)[W/m^2] = W_{abs}(d,\lambda)\,[W]\,/\,M(d)\,[m^2].$$

Weiterhin berechnet sich die Bestrahlungsenergiedichte E(d, $\lambda$) im Abstand d zu:

$$(12) \qquad E(d,\lambda)\,[J/m^2] = I(d,\lambda)\,[W/m^2] \times t[s].$$

In der Realität wird handelt es sich bei den Strahlungsquellen jedoch um Volumenstrahler, so dass die Berechnung vor allem bei kleinen Abständen fehlerbehaftet ist. Die direkte Messung ist in der Praxis jedoch bei kleinen Abständen ebenso fehlerhaft, da verfügbare Sensoren über eine endliche, in der Regel ebene Sensorfläche verfügen und einen limitierenden Öffnungskegel aufweisen. Berechnungen mittels Ray-Tracing-Software können Volumenstrahler simulieren und es können genauere Bestrahlungsdosen angegeben werden. Entsprechende Software ist jedoch nicht jedermann und ständig verfügbar, so dass im Rahmen dieser Anmeldung ausschließlich die fehlerbehaftete, aber eindeutigen Angaben zur Bestrahlungsdosis gemäß des vereinfachten Ansatzes verwendet werden.

Der Fachmann hat diesen Umstand in der rechnerischen oder experimentellen Bestimmung seiner Bestrahlungsstärken und -dosen jeweils bezogen auf sein Rechnungsmodell oder Sensor zu berücksichtigen.

Mit einem winkellimitierten Sensor (Jenoptik AG) wurde bei verschiedenen Gasatmosphären die Abstandsabhängigkeit für einen Excimerstrahler (172 nm) bzw. für einen Hg-Niederdruckstrahler (185 nm) aufgenommen. Für den Hg-Niederdruckstrahler hat der Fachmann darauf zu achten, dass ausschließlich das VUV-Signal registriert wird. Ein Abgleich der theoretischen Messwerten bei Berechnung der Bestrahlungsenergiedichte gemäß Gleichung (11) findet unter Anpassung der Absorptionsquerschnitte derart statt, dass der qualitative Verlauf der Messwerte für Abstände größer 20 mm bestmöglich widergegeben wurde. Hieraus ergeben sich folgende Absorptionsquerschnitte für Luftsauerstoff:

$$\sigma\,(172\text{ nm}) = 1{,}3 \times 10^{-23}\,m^2 = 1{,}3 \times 10^{-19}\,cm^2,$$

$$\sigma \ (185 \ \text{nm})= 2{,}18 \times 10^{-24} \ \text{m}^2 = 2{,}18 \times 10^{-20} \ \text{cm}^2.$$

Vereinfacht wird bei der Berechnung davon ausgegangen, dass die Absorptionsquerschnitte für Luftsauerstoff und Ozon, welches bei der VUV-Bestrahlung in Anwesenheit von Sauerstoff gebildet wird, identisch sind. In der Arbeitsatmosphäre befindlicher Wasserstoff oder Edelgase werden vernachlässigt.

Für die Bestrahlungsdosis von Plasmastrahlung wird der Fachmann über die Lichtstrahlung von 150 - 249 nm integrieren.

Bevorzugt ist ein erfindungsgemäßes Verfahren, wobei die Bestrahlung mit mindestens einer Wellenlänge $\leq$ 200 nm und bevorzugt $\geq$ 140 nm, insbesondere im Bereich 172 nm oder im Bereich 185 nm erfolgt.

Die vorgenannten Wellenlängen bzw. Wellenlängenbereiche haben sich als besonders geeignet für die erfindungsgemäße Vorbehandlung des zu fügenden Silikongummis erwiesen.

Bevorzugt ist entsprechend dem oben Gesagten ein erfindungsgemäßes Verfahren, wobei das Substrat ausgewählt ist aus der Gruppe bestehend aus Glas, Silikongummi, silikatisiertem oder silanisiertem Metall, Kunststoff, insbesondere silikatisiertem oder silanisiertem Kunststoff, Keramik, silikatisiertem oder silanisiertem Holz und silikatisiertem oder silanisiertem Stein. Weiter bevorzugt ist das Substrat kein Silikonharz.

Um heterogene Verbundstrukturen zu ermöglichen, können nach Stand der Technik silikatische Fügepartner wie z.B. Gläser verwendet werden, die naturgemäß Silanolgruppen für Kondensationsreaktionen zur Verfügung stellen.

Alternativ können dem Fügeprozess vorangestellt Verfahren zur Silikatisierung/Silanisierung anderer Substrate verwendet werden. Als Substrate sind hierbei grundsätzlich auch Metalle, Keramiken, Steine und Hölzer geeignet, sowie einige Kunststoffe - letztere ggf. nach (physikalischer) Vorbehandlung zwecks Verbesserung ihrer adhäsiven Eigenschaften.

Als Verfahren zur Silikatisierung/Silanisierung sind im Rahmen der Erfindung bevorzugt:

(i) Eine Flammenpyrolyse geeigneter Silane, ein kommerziell erhältliches Beispiel ist das GASilan der Firma IKTZ.

(ii) Eine plasmapolymere Beschichtung ausgehend von einem siliziumorganischen Präkursor.

(iii) Eine chemische Vorbehandlung auf Basis einer Primerzusammensetzung, die hydrolisierbare Siloxane enthält, ein kommerzielles Beispiel ist der Primer OS1200 von Dow Corning.

Durch jedes der genannten Verfahren werden die Substrate mit einer siliziumbasierten Schicht ausgestattet. Diese stellt oberflächlich Silanol-, Acetoxy- und/oder Alkoxygruppen zur Verfügung für eine anschließende Kondensation mit z.B. Silanolgruppen des vorbehandelten Silikongummis.

Erfindungsgemäß bevorzugt kann ein Verfahren sein, bei dem zur Oberflächenreinigung des Substrates und/oder des Silikongummis vor der Aktivierung in Schritt c) bzw. vor dem Fügen in Schritt d) ein geeigneter Reinigungsschritt vorgenommen wird, um Kontaminationen zu entfernen.

Bevorzugt ist ein erfindungsgemäßes Verfahren, wobei das Silikongummi aus Schritt b) ausgewählt ist aus der Gruppe bestehend aus PDMS, Polyphenylmethylsiloxan, Fluorsilikon und PDMS, bei dem ein Teil der Methylgruppen durch Wasserstoff, Fluoralkyl-, Vinyl-, Phenyl-, Acetoxy-, Ester-. Alkoxy-, (insbesondere Methoxy- und Ethoxy-) Amino-, Amido-, und/oder Oximogruppen substituiert ist.

Ferner ist für das erfindungsgemäße Verfahren bevorzugt, dass das eingesetzte Silikongummi zu $\geq$ 40 Gew.-% aus den im vorstehenden Absatz beschriebenen Materialien besteht.

Diese bevorzugten Materialien haben sich als besonders geeignet für die erfindungsgemäße Vorbehandlung erwiesen.

Weiter bevorzugt ist ein erfindungsgemäßes Verfahren, wobei Schritt d) erst $\geq$ 30 min., bevorzugt $\geq$ 1 h., weiter bevorzugt $\geq$ 2 h. und besonders bevorzugt 8 h. nach Schritt c) erfolgt.

Überraschenderweise hat sich herausgestellt, dass die im erfindungsgemäßen Verfahren vorbehandelten Silikongummioberflächen - insbesondere verglichen mit plasmavorbehandelten Silikongummioberflächen - über einen längeren Zeitraum bis zu mehreren Stunden unter normalen Atmosphärenbedingungen gelagert werden können, ohne dass sie zuviel Haftpotenzial einbüßen. Somit besteht ein erfreulich langes Zeitfenster, währenddessen der Schritt d) (Kontaktieren und Verbinden) nach dem Schritt c) (Aktivieren) durchgeführt werden kann, so dass ausreichend gute Haftergebnisse erzielt werden können. Für UV-aktivierte Proben, die entsprechend vor dem Fügen gelagert werden, werden nur abnehmende Verbundfestigkeiten durch abnehmende kohäsive Versagensanteile festgestellt. Eine Abnahme der Verbundfestigkeit auf 50% der durch direkt nach der Aktivierung durchgeführtes Fügen maximal erzielbaren Werte wird oft erst nach zwei Tagen Lagerdauer konstatiert und die dehäsiven Ausgangseigenschaften der Silikongummis erst nach sieben Tagen. Aufgrund der Reaktivität der aktivierten Oberfläche kann die Lagerdauer vor dem Fügeprozess entsprechend angepasst sein. Dies erhöht die Prozesssicherheit gegenüber den aus dem Stand der Technik benannten Verfahren, wie z.B. der Plasmavorbehandlung.

Dementsprechend ist ein erfindungsgemäßes Verfahren bevorzugt, wobei 7 Tage nach Schritt d) die Verbindungsfläche zwischen dem Substrat und dem Silikongummi über eine Haftkraft verfügt, so dass ein Trennen des Verbundes aus dem Substrat und dem Silikongummi durch kohäsives Versagen im Substrat oder im Silikongummi erfolgt.

Es hat sich herausgestellt, dass bis zu 7 Tage nach Schritt d) bzw. nach dessen Beginn die Haftfestigkeit zwischen Substrat und Silikongummi noch zunimmt. Erst dann scheint die Verbindungsreaktion in vielen Fällen vollständig abgeschlossen zu sein. Bevorzugt ist nach Schritt d) daher eine Lagerung des Verbundes Substrat/Silikongummi zur Haftungsoptimierung mit einer Zeitdauer von ≥ 1 h, bevorzugt ≥ 24 h, weiter bevorzugt ≥ 7 Tagen.

Auch hier ist überraschend, dass eine so hohe Verbundfestigkeit erzielt werden kann, dass ein Versagen des Verbundes nicht an der Oberfläche der Fügepartner (adhäsives Versagen) entsteht, sondern dass es möglich ist, den Verbund so auszugestalten, dass es zu kohäsivem Versagen im Substrat oder im Silikongummi kommt. In vielen Fällen wird dabei selbstverständlich das kohäsive Versagen im Silikongummi erfolgen.

Ein kohäsives Versagen liegt im Sinne der Anmeldung dann vor, wenn ≥ 60% der Trennfläche, bevorzugt ≥ 80% und besonders bevorzugt ≥ 95% und am meisten bevorzugt zu 100% auf einem kohäsiven Versagen beruht. Mit anderen Worten, die Trennfläche nach dem Versagen des Verbundes besteht zu ≤ 40%, bevorzugt ≤ 20%, weiter bevorzugt ≤ 5% und bevorzugt gar nicht aus Bereichen der ursprünglichen Grenzfläche zwischen den Fügepartnern.

Somit lassen sich durch das erfindungsgemäße Verfahren Verbünde erzeugen, deren Haltbarkeit gegenüber Abzugskräften nur durch die kohäsive Festigkeit eines Fügepartners selbst bestimmt wird.

Mit anderen Worten: Die Stabilität im erfindungsgemäßen Verfahren erzeugter Verbundstrukturen ist so hoch, dass eine zerstörende Schälprüfung regelmäßig ein kohäsives Versagen des Silikongummis bei materialtypischen Werten ergibt. Dies gilt sowohl für homogene als auch heterogene Verbünde. Eine Wasserauslagerung über einen Zeitraum von mehr als acht Wochen ändert nichts an diesem Ergebnis. Auch ein Auslagern in kochendem Wasser von mehr als zwei Stunden führt zu gleichbleibend guten Ergebnissen.

Daher haben die im erfindungsgemäßen Verfahren hergestellten Verbindungen den Vorteil, dass sie hydrolysestabil sind. Dementsprechend ist es bevorzugt, dass ein im erfindungsgemäßen Verfahren hergestellter Verbund bei Lagerung im Wasser unter Normalbedingungen (Raumtemperatur, 20°C, Normaldruck) für ≥ 1 Monat, bevorzugt ≥ 3 Monate und besonders bevorzugt ≥ 6 Monate stabil bleibt, das bedeutet, dass er in diesem Zeitraum maximal 10% seiner Verbundfestigkeit verliert.

Es hat sich herausgestellt, dass die oben beschriebene Zeitdauer von etwa 7 Tagen bis zum Erreichen der maximalen Verbundfestigkeit durch eine entsprechende Behandlung stark verkürzt werden kann. Im Sinne der Erfindung sind als entsprechende Behandlungen bevorzugt ein Tempern des Verbundes und/oder das Belasten mit Gewicht.

Im erfindungsgemäßen Verfahren ist es auch möglich und in vielen Fällen bevorzugt, dass nicht die gesamte Fläche des Silikongummis, die zum (späteren) Substrat ausgerichtet ist, aktiviert wird, sondern nur ein Teil davon: Dies ist möglich, indem im erfindungsgemäßen Verfahren nur ein Teil der jeweiligen Fläche bestrahlt wird. Dies kann beispielsweise durch eine gezielte Teilbestrahlung mittels der verwendeten Strahlungsquelle erfolgen, es ist aber auch möglich und in vielen Fällen bevorzugt, Masken einzusetzen. Dadurch können im Silikongummi Haftpunkte, Haftlinien oder Haftmuster erzeugt werden, um so eine optimale Einstellung der Haftkraft und/oder eine Anpassung an die Geometrie des (späteren) Substrates zu erzeugen.

Teil der Erfindung ist die Verwendung von UV-Strahlung mit mindestens einer Wellenlänge ≤ 250 nm, bevorzugt ≤ 225 nm und einer Strahlungsdosis von 150 mJ/cm² - < 2 J/cm² zur Aktivierung eines Silikongummis zum direkten Verbinden mit einer Substratoberfläche, die über reaktive Gruppen verfügt, ausgewählt aus der Gruppe Hydroxy-, Alkoxy-, Acetoxy-, Ether-, Keto-, Aldehyd, Ester-, Carboxy- und/oder Halogenidgruppe.

Wie oben beschrieben ist es durch den Einsatz von UV-Strahlung möglich, ein Verfahren zum Verbinden von Silikongummi anzugeben, das mit einem verhältnismäßig geringen Materialaufwand, hoher Prozesssicherheit und silikongummiseitig ohne den Einsatz von Haftvermittlerstoffen durchgeführt werden kann.

Teil der Erfindung ist ferner ein durch Bestrahlung mit UV-Strahlung mindestens einer Wellenlänge ≤ 250 nm und einer Strahlendosis von 150 mJ/cm² bis < 2 J/cm² behandeltes Silikongummi, gekennzeichnet durch eine gegenüber einem unbehandelten Silikongummi gleicher Ausgangszusammensetzung nach folgender Formel maximalen Verbreiterung ($\Delta FWHM_{max}$) der Si 2p-Peak Halbwertsbreite (FWHM) (in eV), das heisst einer maximalen Differenz der Halbwertsbreite der Si 2p-Peaks zwischen aktiviertem ($FWHM_{UV}$) und nicht aktiviertem Silikongummi ($FWHM_{Ref}$) in eV von:

$$\Delta FWHM_{max} = FWHM_{UV} - FWHM_{Ref} = 0{,}04 * a$$

und bevorzugt gekennzeichnet durch eine nach folgender Formel maximalen Verbreiterung $\Delta FWHM$ der Si 2p-Peak Halbwertsbreite ($FWHM_{max}$):

$$\Delta FWHM_{max} = FWHM_{UV} - FWHM_{Ref} = 0,03 * a$$

jeweils mit a = Zahlenwert des durch die UV-Bestrahlung eingebauten Sauerstoffs in Atom%, bezogen auf die mit XPS messbaren Atome
und/oder gekennzeichnet durch folgendes Verhältnis:

$$\Delta FWHM_{UV} / \Delta FWHM_{Plasma-Behandlung} \leq 1 : 1,5,$$

bevorzugt $\Delta FWHM_{UV} / \Delta FWHM_{Plasma-Behandlung} \leq 1 : 1,75,$
besonders bevorzugt $\Delta FWHM_{UV} / \Delta FWHM_{Plasma-Behandlung} \leq 1 : 2$
mit

$$\Delta FWHM_{UV} = FWHM_{UV} - FWHM_{Ref}$$

$$\Delta FWHM_{Plasma-Behandlung} = FWHM_{Plasma-Behandlung} - FWHM_{Ref,}$$

$FWHM_{Plasma-Behandlung}$ : Halbwertsbreite des Si 2p-Peaks nach Plasmabehandlung
$FWHM_{UV}$ : Halbwertsbreite des Si 2p-Peaks nach UV-Behandlung
$FWHM_{Ref}$ : Halbwertsbreite des Si 2p-Peaks von Silikongummi (Ausgangsmaterial) vor Plasmabehandlung/UV-Bestrahlung

wobei $FWHM_{Plasma}$ der Halbwertsbreite des Si 2p-Peaks nach einer Plasmabehandlung entspricht, wobei für das nicht-aktivierte Silikongummi (gleiches Ausgangsmaterial wie bei der UV-Aktivierung) mittels Plasmabehandlung die gleiche Menge Sauerstoff eingebaut wurde, wie in das UV-aktivierte Silikongummi, jeweils gemessen mittels XPS.

Hierzu wird auch auf das Beispiel 1 verwiesen (siehe unten). Im Zweifelsfall wird die Plasmabehandlung wie in den Beispielen beschrieben durchgeführt, ggf. angepasst an eine veränderte Sauerstoffeinbaumenge.

Die Halbwertsbreite FWHM des Si 2p-Peaks wird jeweils mittels hochaufgelöster XPS-Analyse (X-ray Photoelectron Spectroscopy bzw. Röntgenphotoelektronenspektroskopie) nach Untergrundabzug ermittelt.

Die Halbwertsbreite des Si 2p-Peaks gibt einen Hinweis auf die Homo- bzw. Heterogenität der Funktionalisierung. Es zeigt sich, dass mittels des eingesetzten UV-Lichtes verglichen mit einer Plasmabehandlung, bei der die gleiche Sauerstoffmenge eingebaut wird, eine deutlich geringere Halbwertbreite des Si 2p-Peaks erreicht wird.

Dies bedeutet, dass durch die Vorbehandlung (Aktivierung) im erfindungsgemäßen Verfahren an der Oberfläche des Silikongummis erzeugten Spezies deutlich homogener sind, als solche, die in einem Plasmavorbehandlungsverfahren erreicht werden.

Sofern zu geringe Strahlendosen eingesetzt werden, lässt sich eine Abgrenzung des erfindungsgemäßen Silikongummis gegenüber dem unbehandelten Silikongummi durch den eingebauten Sauerstoff und/oder verringerten Kohlenstoffgehalt erzielen.

Dementsprechend ist ein erfindungsgemäß behandeltes Silikongummi ein solches, dass durch die Vorbehandlung im Rahmen des erfindungsgemäßen Verfahrens (Aktivierung/UV-Modifizierung) über einen um $\geq 4$ Atom-% und besonders bevorzugt $\geq 4,5$ Atom-% erhöhten Sauerstoffgehalt und/oder einen um $\geq 2$ Atom-%, bevorzugt $\geq 3$ Atom-%, weiter bevorzugt $\geq 4$ Atom-% und besonders bevorzugt $\geq 4,5$ Atom-% verringerten Kohlenstoffgehalt besitzt. Dabei sind die genannten Prozentzahlen jeweils bezogen auf die Gesamtzahl aller in der Oberfläche enthaltenen C-, Si- und O-Atome, gemessen mittels XPS. Da das erfindungsgemäße Aktivierungsverfahren nur die oberflächennahen Bereiche des Silikongummis erfasst, ist es regelmäßig möglich, an dem erfindungsgemäßen Silikongummi auch das Ausgangsmaterial festzustellen, da es hierzu lediglich nötig ist, durch Schnitt ins Volumenmaterial die Zusammensetzung unterhalb des modifizierten, oberflächennahen Bereiches zu betrachten.

Sofern eine Plasmabehandlung der Modifikation zugrunde liegt, lässt sich eine Abgrenzung des erfindungsgemäß behandelten Silikongummis gegenüber dem plasmabehandelten Silikongummi durch Unterschiede in der behandlungsbedingten Verbreiterung der Si 2p-Peaks, gemessen mittels XPS, erzielen.

Die Halbwertsbreite (FWHM) des Si 2p-Peaks gibt einen Hinweis auf die Homo- bzw. Heterogenität der Funktionalisierung. Es zeigt sich, dass mittels des eingesetzten UV-Lichtes verglichen mit einer Plasmabehandlung, bei der die gleiche Sauerstoffmenge eingebaut wird, eine deutlich geringere Halbwertbreite des Si 2p-Peaks erreicht wird (vergleiche auch oben). Dies bedeutet, dass durch die Vorbehandlung (Aktivierung) im erfindungsgemäßen Verfahren an der Oberfläche des Silikongummis erzeugten Spezies deutlich homogener sind, als solche, die in einem Plasmavorbehandlungsverfahren erreicht werden.

Teil der Erfindung ist auch ein Verbund aus einem Substrat und einem Silikongummi, der hergestellt ist oder herstellbar ist nach einem erfindungsgemäßen Verfahren. Diese Verbünde weisen die oben beschriebenen Vorteile auf.

Bevorzugte erfindungsgemäße Verbünde zeichnen sich dabei dadurch aus, dass sie einen konstanten Siliziumgehalt bis in die Tiefe besitzen, in die die Vorbehandlung eingewirkt hat.

Ferner lassen sich erfindungsgemäße Verbunde bevorzugt auch dadurch charakterisieren, dass sie oberflächennah ein gegenüber dem Ausgangsmaterial erhöhtes Verhältnis O zu Si besitzen (gemessen mittels STEM/EDX-Analyse), bevorzugt ist das O : Si-Verhältnis gegenüber dem Ausgangsmaterial um 20% in einer Tiefe von 200 nm von der Oberfläche entfernt erhöht.

Besonders bevorzugt lassen sich mit dem erfindungsgemäßen Verfahren erfindungsgemäße homogene Silikongummi-Silikongummi-Verbünde erzeugen, insbesondere beim Fügen von Silikondichtungen, in der Medizintechnik, z.B. bei Beatmungsgeräten, im Prothesenbau, zum Erstellen von Isolationsbeschichtungen und zur Herstellung von Silikonbeuteln aus Halbzeugen. Ein bevorzugtes erfindungsgemäßes Verfahren betrifft die Reparatur eines Silikonbauteils, bei dem durch Bruch oder gezieltes Entfernen von Silikoneinzelbereichen ein schadhafter bzw. auszutauschender Teilbereich rekonstruiert oder anderweitig ergänzt werden muss und die Teile mit dem erfindungsgemäßen Verfahren miteinander verbunden werden. Weiterhin ist bei dieser Variante eine lokale UV-Behandlung mit oder ohne Masken bevorzugt. Durch das erfindungsgemäße Verfahren lassen sich bevorzugt auch erfindungsgemäße heterogene Verbünde im Bereich Fahrzeugbau, hier z.B. Regensensoren und in der Elektroindustrie wie z.B. Silikondichtungen und Metallabdeckungen mit einer Silikongummischicht herstellen. Auch für heterogene Verbünde stellt der Reparaturfall eine Verfahrensvariante dar.

Beispiel 1 XPS-Messung nach Aktivierung:

Zum Vergleich der Effekte der im erfindungsgemäßen Verfahren zu verwendenden Aktivierung werden am Beispiel von Silikongummi, hergestellt aus Dow Corning® QP1-50 Liquid Silicone Rubber Kit, XPS-Messungen durchgeführt. Dabei ist die Referenz das unbehandelte Silikongummi; Probe 1 - 3 wurden einer VUV-Behandlung (Wellenlänge 172 nm, Xeradex-Excimerlampe Osram GmbH) entsprechend folgender Strahlungsdosen ausgesetzt: Probe 1: 30 mJ/cm$^2$ (nicht erfindungsgemäß); Probe 2: 300 mJ/cm$^2$, erfindungsgemäß; Probe 3: 1700 mJ/cm$^2$, erfindungsgemäß. Probe 4 wurde einer Plasmabehandlung ausgesetzt, die zu einem vergleichbaren Sauerstoffeinbau wie im Falle der Probe 3 führte.

Die UV-Bestrahlung erfolgte mit Hilfe einer Xeradex-Excimerlampe der Firma Osram GmbH an Luftatmosphäre. Die Plasmabehandlung erfolgte in einem BIAS-unterstützten Niederdruckprozess für 30 s bei 300 W und einem Sauerstoffgasfluss von 200 ml/min (Reaktorvolumen: 0,75 m$^3$, Anregungsfrequenz 13,56 MHz, Arbeitsdruck 10$^{-2}$ mbar, BIAS-Spannung: 300V +- 10V).

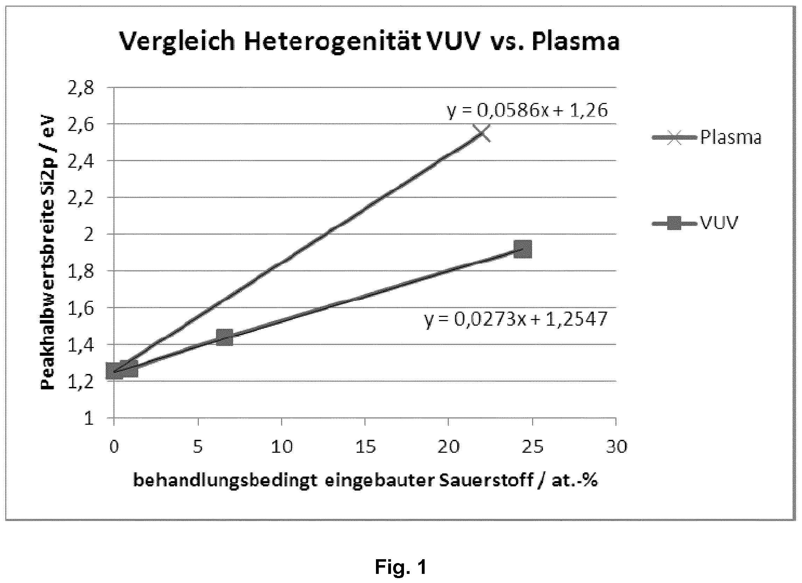

Die Ergebnisse sind in Tabelle 1 aufgeführt. Aus der Tabelle 1 lässt sich die Fig. 1 ableiten, die die Halbwertsbreiten der Si 2p-Peaks aus den XPS-Messungen darstellt.

**Tabelle 1: XPS-Ergebnisse zur Elementzusammensetzung und Halbwertsbreiten Si 2p und O 1s Peaks einer unbehandelten sowie modifizierter Silikongummiproben**

| Element | Si 2p | | O 1s | | C 1s |
|---|---|---|---|---|---|
| | Konz. /at.-% | FWHM /eV | Konz. /at.-% | FWHM /eV | Konz. /at.-% |
| Referenz | 25 | 1,26 | 27,4 | 1,08 | 47,6 |
| Probe 1 | 25,2 | 1,27 | 28,3 | 1,10 | 46,5 |
| Probe 2 | 25 | 1,44 | 34 | 1,23 | 41 |
| Probe 3 | 23,7 | 1,92 | 51,8 | 1,48 | 24,1 |
| Probe 4 | 24,7 | 2,55 | 49,4 | 1,6 | 25,9 |

Das Ergebnis der XPS-Experimente ist, dass die Si 2p-Peakhalbwertsbreiten deutlich geringer sind, als die bei einer Plasmabehandlung mit vergleichbarem Sauerstoffeinbau. Dies sagt aus, dass die im gemäß dem erfindungsgemäßen Verfahren durchgeführten Vorbehandlungsschritt erzeugten chemischen Spezies an der Oberfläche weniger zahlreich als bei einer Plasmavorbehandlung sind. Analoges gilt auch für die Halbwertsbreiten des O 1s-Peaks, wobei hier die feststellbaren Unterschiede nicht ganz so deutlich sind.

Beispiel 2: Herstellung von erfindungsgemäßen Fügeverbünden:

a) Fügepartner 1: Silikongummi - Vorbehandlung: Bestrahlung mit einer Xeradex-Excimerlampe (Wellenlänge 172 nm) an Luftatmosphäre und Normaldruck, Strahlungsdosis: 300 mJ/cm$^2$
Fügepartner 2: Silikongummi - Vorbehandlung: Bestrahlung mit einer Xeradex-Excimerlampe (Wellenlänge 172 nm) an Luftatmosphäre und Normaldruck, Strahlungsdosis: 300 mJ/cm$^2$

b) Fügepartner 1: Silikongummi - Vorbehandlung: Bestrahlung mit einer Xeradex-Excimerlampe (Wellenlänge 172 nm) an Luftatmosphäre und Normaldruck, Strahlungsdosis: 300 mJ/cm$^2$
Fügepartner 2: Stahl oder Aluminium - Vorbehandlung: 5 sec/cm$^2$ (Flammenpyrolyse von Silanen)

c) Fügepartner 1: Silikongummi - Vorbehandlung: Bestrahlung mit einer Xeradex-Excimerlampe (Wellenlänge 172 nm) an Luftatmosphäre und Normaldruck, Strahlungsdosis: 300 mJ/cm$^2$
Fügepartner 2: Stahl oder Aluminium - Vorbehandlung: Wischapplikation eines silanhaltigen Primers, 2 Stunden Wartezeit

Die Silikongummisubstrate werden mit Hilfe von Xeradex Excimerlampen der Firma Osram GmbH bei einem Lampenabstand von 1 cm an Luftatmosphäre behandelt. Im Anschluss an die Vorbehandlungen werden die aktivierten Halbzeuge gefügt. Hierbei ist es ausreichend, die Oberflächen in Kontakt zu bringen, ein Anpressen durch zusätzliche Gewichte oder eine Evakuierung zwischen den Fügeteilen ist nicht notwendig.
Das Silikongummi der shore-Härte A 50 wurde vom Hersteller aus dem Dow Corning® QP1-50 Liquid Silicone Rubber Kit bereitgestellt. Als Metallsubstrate kamen Bleche einer Al99,5% und einer AIMg3 Legierung zum Einsatz, sowie V3C und VA-Stahl, geliefert von der Fa. EMG-Edelmetalle. Zum Herstellen einer siliziumorganischen Oberfläche auf dem Aluminium wurde der 1200 OS Primer der Fa. Dow Corning benutzt. Dieser wurde nach Anweisung im technischen Datenblatt durch einmalige Wischapplikation mit einem fusselfreien Tuch aufgebracht.
Die 180°-Schälprüfung wurde in Anlehnung an DIN EN ISO 8510-2:2010 mit einer Zuggeschwindigkeit von 300 mm/min durchgeführt.
Alle nach Beispiel 2 a-c) angefertigten Fügeverbünde zeigen nach zerstörender Schälprüfung ein kohäsives Versagen des Silikongummifügepartners.

Beispiel 3: Verringerung der Zeitdauer zum Erreichen der Endhaftfestigkeit:

Bei den in Beispiel 2 hergestellten Verbünden ließ sich jeweils die Zeitdauer bis zum Erreichen der Endhaftfestigkeit durch Behandlung des Verbundes wie folgt verringern:

- 2 Stunden bei 200 °C ohne zusätzlichen Anpressdruck

- 2 Tage Lagerung bei einem Anpressdruck von 3 kPa

- 24 Stunden Lagerung bei 80 °C ohne zusätzlichen Anpressdruck

## Patentansprüche

1. Verfahren zum Verbinden eines Substrates mit Silikongummi, umfassend die Schritte:

a) Bereitstellen des Substrates, wobei das Substrat an seiner Oberfläche über reaktive Gruppen verfügt, ausgewählt aus der Gruppe bestehend aus Hydroxy-, Alkoxy-, Acetoxy-, Ether-, Keto-, Aldehyd, Ester-, Carboxy- und/oder Halogenidgruppe,
b) Bereitstellen von Silikongummi, bevorzugt in teilvernetzter und besonders bevorzugt in vollständig vernetzter Form,
c) Bestrahlen des Silikongummis mit UV-Strahlung mindestens einer Wellenlänge $\leq$ 250 nm, bevorzugt $\leq$ 225 nm und einer Strahlungsdosis von 150 mJ/cm$^2$ - < 2 J/cm$^2$ bei einer sauerstoffhaltigen Atmosphäre, so dass das Silikongummi einen um $\geq$ 4 Atom% erhöhten Sauerstoffgehalt besitzt, bezogen auf die Gesamtzahl der in der Oberfläche enthaltenen C, Si und O-Atome, gemessen mittels XPs.
d) Kontaktieren der Substratoberfläche mit dem bestrahlten Silikongummi, wobei es zum Stoffschluss zwischen der Substratoberfläche und dem Silikongummi kommt.

2. Verfahren nach Anspruch 1, wobei Schritt c) mit einer Excimer-Lampe oder einem Quecksilberniederdruckstrahler durchgeführt wird.

3. Verfahren nach einem der Ansprüche 1 oder 2, wobei die Bestrahlung mit mindestens einer Wellenlänge $\leq 200$ nm erfolgt

4. Verfahren nach einem der vorangehenden Ansprüche, wobei das Substrat ausgewählt ist aus der Gruppe bestehend aus Glas, Silikongummi, silikatisiertem oder silanisiertem Metall, Kunststoff, insbesondere silikatisiertem oder silanisiertem Kunststoff, Keramik, silikatisiertem oder silanisiertem Holz und silikatisiertem oder silanisiertem Stein.

5. Verfahren nach einem der vorangehenden Ansprüche, wobei das Silikongummi aus Schritt b) ausgewählt ist aus der Gruppe bestehend aus PDMS, Polyphenylmethylsiloxan, Fluorsilikon und PDMS, bei dem ein Teil der Methylgruppen durch Wasserstoff, Fluoralkyl-, Vinyl-, Phenyl-, Acetoxy-, Ester-. Alkoxy-, Amino-, Amido-, und/oder Oximogruppen substituiert ist.

6. Verfahren nach einem der vorangehenden Ansprüche, wobei Schritt d) erst $\geq 30$ min., bevorzugt $\geq 1$ h., weiter bevorzugt $\geq 2$ h. und besonders bevorzugt 8 h. nach Schritt c) erfolgt.

7. Verfahren nach einem der vorangehenden Ansprüche, wobei 7 Tage nach Schritt d) die Verbindungsfläche zwischen dem Substrat und dem Silikongummi über eine Haftkraft verfügt, so dass ein Trennen des Verbundes aus dem Substrat und dem Silikongummi durch kohäsives Versagen im Substrat oder im Silikongummi erfolgt.

8. Verwendung von UV-Strahlung mit mindestens einer Wellenlänge $\leq 250$ nm, bevorzugt $\leq 225$ nm und einer Strahlungsdosis von 150 mJ/cm$^2$ - < 2 J/cm$^2$ zur Aktivierung eines Silikongummis zum direkten Verbinden mit einer Substratoberfläche, die über reaktive Gruppen verfügt, ausgewählt aus der Gruppe Hydroxy-, Alkoxy-, Acetoxy-, Ether-, Keto-, Aldehyd, Ester-, Carboxy- und/oder Halogenidgruppe, wobei durch die UV-Strahlung das Silikongummi einen um $\geq 4$ Atom% erhöhten Sauerstoffgehalt besitzt, bezogen auf die Gesamtzahl der in der Oberfläche enthaltenen C, Si und O-Atome, gemessen mittels XPs.

9. Durch Bestrahlung mit UV-Strahlung mindestens einer Wellenlänge $\leq 250$ nm und einer Strahlendosis von 150 mJ/cm$^2$ bis < 2 J/cm$^2$ behandeltes Silikongummi, wobei durch die UV-Strahlung das Silikongummi einen um $\geq 4$ Atom% erhöhten Sauerstoffgehalt besitzt, bezogen auf die Gesamtzahl der in der Oberfläche enthaltenen C, Si und O-Atome, gemessen mittels XPs und **gekennzeichnet durch** eine gegenüber einem unbehandelten Silikongummi gleicher Ausgangszusammensetzung nach folgender Formel maximalen Verbreiterung ($\Delta$FWHMmax) der Si 2p-Peak Halbwertsbreite (FWHM) (in eV), das heisst einer maximalen Differenz der Halbwertsbreite der Si 2p-Peaks zwischen aktiviertem (FWHMUV) und nicht aktiviertem Silikongummi (FWHMRef) in eV von:

$$\Delta FWHM_{max} = FWHM_{UV} - FWHM_{Ref} = 0{,}04 * a$$

mit a = Zahlenwert des durch die UV-Bestrahlung eingebauten Sauerstoffs in Atom%, bezogen auf die mit XPS messbaren Atome
und/oder **gekennzeichnet durch** folgendes Verhältnis:

$$\Delta FWHM_{UV} / \Delta FWHM_{Plasma\text{-}Behandlung} \leq 1 : 1{,}5,$$

mit

$$\Delta FWHM_{UV} = FWHM_{UV} - FWHM_{Ref}$$

$$\Delta FWHM_{Plasma\text{-}Behandlung} = FWHM_{Plasma\text{-}Behandlung} - FWHM_{Ref,}$$

$FWHM_{Plasma\text{-}Behandlung}$ : Halbwertsbreite des Si 2p-Peaks nach Plasmabehandlung

FWHM$_{UV}$: Halbwertsbreite des Si 2p-Peaks nach UV-Behandlung

FWHM$_{Ref}$ : Halbwertsbreite des Si 2p-Peaks von Silikongummi (Ausgangsmaterial) vor Plasmabehandlung/UV-Bestrahlung

wobei FWHM$_{Plasma}$ der Halbwertsbreite des Si 2p-Peaks nach einer Plasmabehandlung entspricht, wobei für das nicht-aktivierte Silikongummi (gleiches Ausgangsmaterial wie bei der UV-Aktivierung) mittels Plasmabehandlung die gleiche Menge Sauerstoff eingebaut wurde, wie in das UV-aktivierte Silikongummi, jeweils gemessen mittels XPS.

10. Verbund aus einem Substrat und einer Silikongummischicht, hergestellt oder herstellbar nach einem Verfahren nach einem der Ansprüche 1 bis 7.

**Claims**

1. A method for joining a substrate to silicone rubber, comprising the steps:

   a) making available the substrate, wherein the substrate has on its surface reactive groups, selected from the group consisting of hydroxy, alkoxy, acetoxy, ether, keto, aldehyde, ester, carboxy and/or halide group,
   b) making available silicone rubber, preferably in partially cross-linked and particularly preferably in fully cross-linked form,
   c) irradiating the silicone rubber with UV radiation of at least a wavelength of $\leq 250$ nm, preferably $\leq 225$ nm, and a radiation dose of 150 mJ/cm$^2$ - < 2 J/cm$^2$ in an oxygen-containing atmosphere, so that the silicone rubber has an oxygen content which is increased by $\geq 4$ at%, relative to the total number of C, Si and O atoms contained in the surface, measured by means of XPS,
   d) contacting the substrate surface with the irradiated silicone rubber, with a material-formed bond being produced between the substrate surface and the silicone rubber.

2. A method according to Claim 1, wherein step c) is carried out with an excimer lamp or a low-pressure mercury lamp.

3. A method according to one of Claims 1 or 2, wherein the irradiation takes place with at least a wavelength of $\leq 200$ nm.

4. A method according to one of the preceding claims, wherein the substrate is selected from the group consisting of glass, silicone rubber, silicatised or silanised metal, plastics material, in particular silicatised or silanised plastics material, ceramic, silicatised or silanised wood and silicatised or silanised stone.

5. A method according to one of the preceding claims, wherein the silicone rubber of step b) is selected from the group consisting of PDMS, polyphenylmethylsiloxane, fluorosilicone and PDMS, in which some of the methyl groups are substituted by hydrogen, fluoroalkyl, vinyl, phenyl, acetoxy, ester, alkoxy, amino, amido, and/or oximo groups.

6. A method according to one of the preceding claims, wherein step d) does not take place until $\geq 30$ min., preferably $\geq 1$ h, more preferably $\geq 2$ h and particularly preferably 8 h after step c).

7. A method according to one of the preceding claims, wherein 7 days after step d) the joining face between the substrate and the silicone rubber has an adhesive force, so that separation of the composite consisting of the substrate and the silicone rubber takes place by cohesive failure in the substrate or in the silicone rubber.

8. Use of UV radiation of at least a wavelength of $\leq 250$ nm, preferably $\leq 225$ nm and a radiation dose of 150 mJ/cm$^2$ - < 2 J/cm$^2$ for activating a silicone rubber for directly joining to a substrate surface which has reactive groups, selected from the group hydroxy, alkoxy, acetoxy, ether, keto, aldehyde, ester, carboxy and/or halide group, wherein due to the UV radiation the silicone rubber has an oxygen content which is increased by $\geq 4$ at%, relative to the total number of C, Si and O atoms contained in the surface, measured by means of XPS.

9. Silicone rubber treated by irradiation with UV radiation at least of a wavelength of $\leq 250$ nm and a radiation dose of 150 mJ/cm$^2$ to < 2 J/cm$^2$, wherein due to the UV radiation the silicone rubber has an oxygen content which is increased by $\geq 4$ at%, relative to the total number of C, Si and O atoms contained in the surface, measured by means of XPS, and characterised, compared with an untreated silicone rubber of the same starting composition, by a maximum widening ($\Delta$FWHMmax) of the Si 2p peak full width at half maximum (FWHM) (in eV) in accordance with the following formula, that is to say a maximum difference of the full width at half maximum of the Si 2p peak between the activated (FWHMUV) and non-activated silicone rubber (FWHMRef) in eV of:

$$\Delta FWHM_{max} = FWHM_{UV} - FWHM_{ref} = 0.04 \text{ x a}$$

with a = numerical value of the oxygen incorporated by the UV irradiation in at%, relative to the atoms measurable with XPS
and/or **characterised by** the following ratio:

$$\Delta FWHM_{UV} / \Delta FWHM_{plasma\ treatment} \leq 1 : 1.5,$$

with

$$\Delta FWHM_{UV} = FWHM_{UV} - FWHM_{ref}$$

$$\Delta FWHM_{plasma\ treatment} = FWHM_{plasma\ treatment} - FWHM_{ref},$$

$FWHM_{plasma\ treatment}$ : full width at half maximum of the Si 2p peak after plasma treatment
$FWHM_{UV}$: full width at half maximum of the Si 2p peak after UV treatment
$FWHM_{ref}$: full width at half maximum of the Si 2p peak of silicone rubber (starting material) prior to plasma treatment/UV irradiation

wherein $FWHM_{plasma}$ corresponds to the full width at half maximum of the Si 2p peak after plasma treatment, wherein for the non-activated silicone rubber (same starting material as for the UV activation) by means of plasma treatment the same amount of oxygen has been incorporated as into the UV-activated silicone rubber, in each case measured by means of XPS.

10. A composite consisting of a substrate and a silicone rubber layer, produced or produceable according to a method according to one of Claims 1 to 7.

**Revendications**

1. Procédé de liaison d'un substrat à un caoutchouc silicone, comprenant les étapes :

a) de fourniture du substrat, dans lequel le substrat dispose au niveau de sa surface de groupes réactifs choisis parmi le groupe constitué de groupe hydroxy, alcoxy, acétoxy, éther, cétone, aldéhyde, ester, carboxy et/ou halogénure,
b) de fourniture de caoutchouc silicone, de manière préférée sous une forme partiellement réticulée et de manière particulièrement préférée sous une forme totalement réticulée,
c) d'exposition du caoutchouc silicone à un rayonnement UV d'au moins une longueur d'onde ≤ 250 nm, de manière préférée ≤ 225 nm et à une dose de rayonnement de 150 mJ/cm$^2$ - < 2 J/cm$^2$ dans une atmosphère contenant de l'oxygène de sorte que le caoutchouc silicone possède une teneur en oxygène augmentée de ≥ 4 % at par rapport au nombre total des atomes C, Si et O contenus à la surface, mesurée au moyen d'une spectroscopie XPS,
d) de mise en contact de la surface de substrat avec le caoutchouc silicone exposé au rayonnement, dans lequel cela donne lieu à une liaison de matière entre la surface de substrat et le caoutchouc silicone.

2. Procédé selon la revendication 1, dans lequel l'étape c) est effectuée avec une lampe Excimer ou un émetteur au mercure à basse pression.

3. Procédé selon l'une quelconque des revendications 1 ou 2, dans lequel l'exposition à un rayonnement a lieu avec au moins une longueur d'onde ≤ 200 nm.

4. Procédé selon l'une quelconque des revendications précédentes, dans lequel le substrat est choisi parmi le groupe constitué de verre, caoutchouc silicone, métal silicaté ou silanisé, matière plastique, en particulier matière plastique silicatée ou silanisée, céramique, bois silicaté ou silanisé et pierre silicatée ou silanisée.

5. Procédé selon l'une quelconque des revendications précédentes, dans lequel le caoutchouc silicone issu de l'étape b) est choisi parmi le groupe constitué de PDMS, polyphényleméthylsiloxane, de fluorosilicone et de PDMS, où une partie des groupes méthyle est substituée par de l'hydrogène, des groupes fluoroalkyle, vinyle, phényle, acétoxy, ester, alcoxy, amino, amido et/ou oximo.

6. Procédé selon l'une quelconque des revendications précédentes, dans lequel l'étape d) a lieu d'abord ≥ 30 min., de manière préférée ≥ 1 h, de manière davantage préférée ≥ 2 h et de manière particulièrement préférée 8 h après l'étape c).

7. Procédé selon l'une quelconque des revendications précédentes, dans lequel 7 jours après l'étape d), la surface de liaison entre le substrat et le caoutchouc silicone dispose d'une force d'adhérence de sorte qu'une séparation du composite du substrat et du caoutchouc silicone a lieu par défaillance de cohésion dans le substrat ou dans le caoutchouc silicone.

8. Utilisation d'un rayonnement UV d'au moins une longueur d'onde ≤ 250 nm, de manière préférée ≤ 225 nm et d'une dose de rayonnement de 150 mJ/cm$^2$ - 2 J/cm$^2$ pour activer un caoutchouc silicone pour la liaison directe à une surface de substrat, qui dispose de groupes réactifs choisis parmi le groupe de groupe hydroxy, alcoxy, acétoxy, éther, cétone, aldéhyde, ester, carboxy et/ou halogénure, dans laquelle du fait du rayonnement UV, le caoutchouc silicone possède une teneur en oxygène augmentée de ≥ 4 % at, par rapport au nombre total des atomes de C, Si et O contenus dans la surface, mesurée par une spectroscopie XPS.

9. Caoutchouc silicone traité par exposition à un rayonnement UV d'au moins une longueur d'onde ≤ 250 nm et à une dose de rayon de 150 mJ/cm$^2$ à < 2 J/cm$^2$, dans lequel du fait du rayonnement UV, le caoutchouc silicone possède une teneur en oxygène augmentée de ≥ 4 % at, par rapport au nombre total des atomes de C, Si et O contenus dans la surface, mesurée au moyen d'une spectroscopie XPS et **caractérisé par** une composition de départ identique par rapport à un caoutchouc silicone non traité selon la formule suivante étalement maximal (ΔFWHMmax) de la largeur de valeur moyenne des pics 2p Si (FWHM) (en eV), en d'autres termes une différence maximale de la largeur de valeur moyenne des pics 2p Si entre un caoutchouc silicone activé (FWHMUV) et non activé (FWHMRef) en eV de :

$$\Delta FWHM_{max} = \Delta FWHM_{UV} - \Delta FWHM_{Ref} = 0,04 * a$$

avec a = valeur numérique de l'oxygène intégré par le rayonnement UV en % at, par rapport aux atomes pouvant être mesurés par spectroscopie XPS,
et/ou **caractérisé par** un rapport suivant :

$$\Delta FWHM_{UV}/\Delta FWHM_{traitement-plasma} \leq 1:1,5,$$

avec

$$\Delta FWHM_{UV} = FWHM_{UV} - FWHM_{Ref}$$

$$\Delta FWHM_{traitement-plasma} = FWHM_{traitement-plasma} - FWHM_{Ref},$$

$FWHM_{traitement-plasma}$ : largeur de valeur moyenne du pic 2p Si après le traitement au plasma
$FWHM_{UV}$ : largeur de valeur moyenne du pic 2p Si après le traitement UV
$FWHM_{Ref}$ : largeur de valeur moyenne du pic 2p Si de caoutchouc silicone (matériau de départ) avant le traitement au plasma/exposition au rayonnement UV,

dans lequel $FWHM_{plasma}$ correspond à la largeur de valeur moyenne du pic 2p Si après un traitement au plasma, dans lequel pour le caoutchouc silicone non activé (même matériau de départ que dans le cas de l'activation UV) au moyen du traitement au plasma, la même quantité d'oxygène a été intégrée que dans le caoutchouc silicone activé aux UV, respectivement mesurée au moyen d'une spectroscopie XPS.

10. Composite composé d'un substrat et d'une couche de caoutchouc silicone, fabriqué ou pouvant être fabriqué selon un procédé selon l'une quelconque des revendications 1 à 7.

**Fig. 1**

**EP 3 071 392 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0761415 B9
- DE 4407478 A1
- WO 2004035857 A2
- WO 002008132230 A3
- US 20130037207 A1

**In der Beschreibung aufgeführte Nicht-Patentliteratur**

- **YAMAMOTO, T. ; FUJIL, T.** Proceedings of μTAS 2004: 8th International Conference on Miniaturized Systems for Chemistry and Life Science. The Royal Society of Chemistry, 2004, 133
- **YAMAMOTO, T.** *Surface and Interface Analysis,* 2011, vol. 43, 1271
- **BHATTACHARYA, S. ; DATT, A. ; BERG, M.J. ; GANGOPADHYAY, S.** *Journal of Microelectomechanical Systems,* 2005, vol. 14, 590